# FASCICULE DE BREVET EUROPEEN

(11) **EP 0 417 007 B1**
(45) Date de publication et mention de la délivrance du brevet: **26.10.1994**
(21) Numéro de dépôt: 90402454.4
(22) Date de dépôt: 06.09.1990
(51) Int. Cl.: G07G 1/14, G07F 7/08

(54) **Système permettant d'effectuer sans risque de fraude un paiement au moyen d'une carte électronique, et procédé pour utiliser un tel système**
System zum Ermöglichen der Durchführung einer Zahlung mittels elektronische Karte, ohne Bestrugsgefahr, und Verfahren zur Verwendung eines solchen Systems
System enabling the performing of payment by way of an electronic card, without any risk of fraud, and method for use of such a system

(30) Priorité: 08.09.1989 FR 8911762
(43) Date de publication de la demande: 13.03.1991
(73) Titulaire: COMPAGNIE GENERALE D'AUTOMATISME CGA-HBS, F-75008 Paris (FR)
(72) Inventeur: Simonin, Marcel, F-91220 Bretigny Sur Orge (FR)
(74) Mandataire: Weinmiller, Jürgen

(56) Documents cités:
- EP-A- 0 006 596
- EP-A- 0 172 670
- EP-A- 0 237 815
- EP-A- 0 253 240
- EP-A- 0 256 768
- GB-A- 2 082 120
- US-A- 3 869 700
- US-A- 4 068 213
- US-A- 4 650 978

## Description

La présente invention concerne un système permettant d'effectuer sans risque de fraude un paiement d'une valeur x entre un client possédant une carte électronique à semi-conducteur créditée d'une somme X et un prestataire possédant une caisse électronique ayant un montant actuel M, ladite carte et ladite caisse étant équipées de moyens de communication bidirectionnelle.

On connaît un système de paiement par carte électronique qui permet, après acquittement d'une somme donnée, et au moyen d'une carte créditée d'un certain nombre d'unités de paiement correspondant à la somme préalablement versée, d'utiliser des prestations offertes par un prestataire. C'est le cas de la carte téléphonique.

Un système de traitement de transactions est décrit dans le document EP-A-0 256 768.

Cependant, ce système est utilisé par un prestataire unique.

On a imaginé également un système dans lequel une telle carte pourrait être utilisée auprès de plusieurs prestataires.

Ceci suppose que chaque prestataire possède une "caisse électronique" qui puisse se créditer des unités de paiement dont la carte est débitée à chaque utilisation d'un service de manière, ensuite, à se faire créditer de la somme correspondante par un organisme central émetteur des cartes.

Un tel système, pour qu'il soit viable, doit offrir de très grandes garanties contre les fraudes possibles de la part, tant des prestataires que des clients, en particulier il faut impérativement qu'il n'y ait aucune possibilité de fraude de la caisse du prestataire. Du côté du client, la question est actuellement résolue par l'utilisation de cartes à semi-conducteur, dont le degré de résistance à la fraude est généralement approprié au besoin par la complexité du composant électronique incorporé à la carte et de son masque.

L'invention a donc pour but de proposer un système de paiement par carte électronique à semi-conducteur, susceptible d'être utilisée indifféremment auprès de plusieurs prestataires et ce, en rendant impossible la fraude d'un prestataire consistant, par exemple, à incrémenter la valeur de sa caisse d'une valeur supérieure à la valeur dont la carte du client a été débitée, ou même à incrémenter sa caisse en dehors de toute transaction ou encore à effectuer tout autre type de fraude vis-à-vis de l'organisme central auprès duquel il doit se faire créditer d'une valeur correspondante à la valeur cumulée dans sa caisse électronique.

L'invention a ainsi pour objet un système permettant d'effectuer sans risque de fraude un paiement d'une valeur x entre un client possédant une carte électronique à semi-conducteur, créditée d'une somme X et un prestataire possédant une caisse électronique ayant un montant actuel M, ladite carte et ladite caisse étant équipées de moyens de communication bidirectionnelle, caractérisé en ce que ledit montant M de ladite caisse est dissimulé dans ladite caisse sous une forme numérique chiffrée Y au moyen d'une fonction de chiffrage F éventuellement associée à une clé CS appliquée à un nombre M′ constitué par le montant M associé à au moins un autre nombre, la carte étant programmée pour réaliser à l'aide de la même clé CS, la fonction F ainsi que la fonction inverse F⁻¹ de la fonction de chiffrage F, et en ce que ledit prestataire est relié de manière bidirectionnelle à un organisme émetteur connaissant les fonctions F, F⁻¹ et la clé CS.

L'invention a aussi pour objet un procédé pour effectuer un paiement de la part d'un client à un prestataire, au moyen du système selon l'invention caractérisé en ce qu'il comprend les opérations suivantes :
- on établit une connexion bidirectionnelle entre la carte et ladite caisse,
- la caisse transfère dans ladite carte le montant x du paiement à effectuer ainsi que ladite information numérique chiffrée Y dans laquelle est dissimulé le montant actuel M de la caisse,
- la carte déchiffre l'information numérique Y par la fonction F⁻¹ à l'aide de ladite clé CS pour obtenir ledit montant M,
- la carte additionne le montant M au montant x du paiement à effectuer,
- la carte soustrait de son montant X la valeur x,
- la carte élabore une information numérique chiffrée Y₁ au moyen de a fonction de chiffrage F appliquée, à l'aide de la clé CS à un nombre M′₁ constitué par la somme M+x associée audit autre nombre,
- la carte transfère dans ladite caisse l'information numérique chiffrée Y₁ qui se substitue à l'ancienne information numérique chiffrée Y.

Ainsi, la "caisse" du prestataire contient une information numérique chiffrée Y dans laquelle est dissimulée la somme M qu'elle censée contenir. Cette information numérique Y évolue à chaque opération de paiement par une carte, et prend les valeurs successives Y, Y₁, Y₂ ...Yₙ.

Bien entendu la caisse ignore la fonction de chiffrage F ainsi que la fonction inverse F⁻¹ et également la clé CS.

Avantageusement, ledit autre nombre est constitué par un numéro de session correspondant aux différents transferts de la caisse vers l'organisme émetteur. Le numéro de session est fourni par l'organisme émetteur à chaque session lors de la transmission à la caisse d'une nouvelle information chiffrée Yₒ après que le compte du prestataire chez l'organisme émetteur a été crédité du montant Mₙ de sa caisse.

Il est en effet nécessaire que de temps à autre les prestataires fassent créditer leur compte de la somme Mₙ correspondant à l'information numérique chiffrée Yₙ inscrite dans leur caisse.

L'invention a donc aussi pour objet un procédé pour créditer ces un émetteur, le compte d'un prestataire en utilisant le système selon l'invention, caractérisé par les opérations suivantes :
- le prestataire active la liaison de sa caisse avec ledit organisme émetteur,
- ladite caisse transfère audit organisme ladite information numérique chiffrée Y dans laquelle se dissimule le montant M de sa caisse,
- ledit organisme déchiffre ladite information Y à l'aide de ladite fonction inverse F⁻¹ et de la clé CS et crédite le compte dudit prestataire de la somme M déchiffrée,
- l'émetteur adresse à la caisse du prestataire une nouvelle information numérique chiffrée Yₒ obtenue par application de la fonction de chiffrage F, au moyen de la clé CS, à une information M′ₒ qui comporte le nouveau montant de la caisse éventuellement égal à zéro et une nouvelle valeur dudit autre nombre.

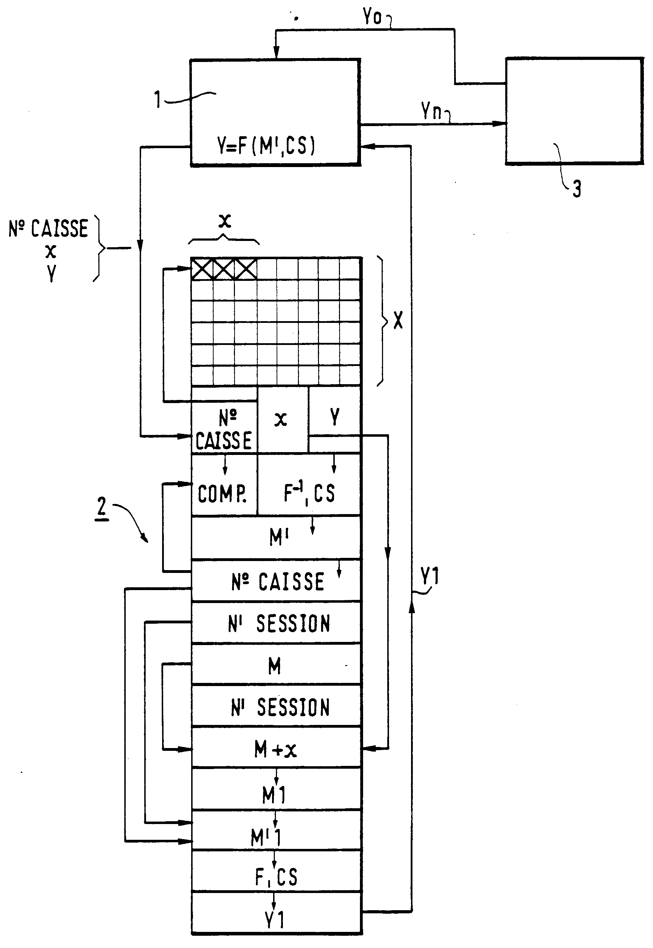

On va maintenant donner un exemple particulier de fonctionnement du système en se référant à la figure unique jointe.

Dans cette figure, qui est un schéma synoptique, on a figuré en la caisse électronique d'un prestataire, en 2 une carte électronique à semi-conducteur dite carte à puce ou à mémoire d'un client, et en 3 l'organisme émetteur.

C'est l'organisme émetteur 3 qui délivre une carte telle que 2 à un client. Cette carte est délivrée créditée d'une certaine somme X sous forme de "jetons électroniques" moyennant le versement de la somme correspondante. Ces jetons sont figurés par les cases du quadrillage représenté. Chaque jeton ou case représente une valeur déterminée et le nombre de "jetons" est fixé à la construction de la carte. On ne peut par la suite que supprimer des jetons, mais non pas en ajouter.

A un moment donné, la caisse 1 contient une information numérique chiffrée Y qui correspond à une information M′ et qui est obtenue en appliquant à M′ une fonction de chiffrage F associée à une clé CS. On écrit conventionnellement : Y = F (M′, CS).

La caisse électronique 1 ignore la fonction de chiffrage F ainsi que la clé CS.

L'information M′ est une information complexe comprenant dans l'ordre les informations suivantes :
- n° de la caisse
- n° de session choisi par l'émetteur lors du dernier transfert
- valeur M du montant actuel de la caisse (nombre de "jetons")
- n° de session choisi par l'émetteur lors du dernier transfert on écrit conventionnellement : M′ = N° caisse + N° session + M + N° session.

Lors d'un paiement au moyen de la carte 2, la caisse 1 envoie à la carte 2 un ordre de paiement comportant en clair le n° de la caisse, le nombre x de "jetons" correspondant au paiement ainsi que l'information chiffrée Y.

Selon l'invention, la carte 2 est programmée pour pouvoir réaliser la fonction de chiffrage F, la fonction inverse de déchiffrage F⁻¹ ; la carte connaît la clé CS et est programmée pour effectuer les opérations mathématiques décrites dans la suite.

La carte 2 déchiffre donc l'information Y en lui appliquant la fonction F⁻¹ inverse de la fonction F, associée à la clé CS, de manière à obtenir l'information réelle M′ et donc notamment la valeur M.

La carte 2 vérifie en outre que le numéro de session est répété deux fois et que le n° de la caisse transmis en clair correspond bien à celui contenu dans l'information M′.

Si cette information n'est pas satisfaisante, la transaction est arrêtée.

Ensuite, la carte additionne le montant à payer x au montant M de la caisse pour obtenir M₁ = M + x.

La carte soustrait de son montant X la valeur x, par exemple trois, en "grillant" trois jetons représentés dans la figure par trois cases munies d'une croix.

La carte élabore ensuite une nouvelle information chiffrée Y₁ au moyen de la fonction de chiffrage F appliquée, à l'aide de la clé CS à la nouvelle information M′₁ = N° caisse + N° session + M₁ + N° session Y₁ = F (M′₁, CS).

La carte transfère ensuite dans la caisse 1 l'information numérique chiffrée Y₁ qui se substitue à l'ancienne information Y.

La caisse peut également mémoriser en clair le montant total de sa caisse de manière à permettre une vérification au moment où le compte du prestataire est crédité par l'organisme émetteur.

En fin de journée, le prestataire transfère à l'émetteur 3 le contenu chiffré Y, disons Yₙ s'il y a eu n transactions dans la journée, de sa caisse 1.

L'émetteur déchiffre l'information Yₙ pour obtenir M′ₙ = n° caisse + N° session + Mₙ + n° session.

Il contrôle le n° de la caisse et le n° de session et, si ces contrôles sont satisfaisants, crédite le compte du prestataire du montant Mₙ.

Il attribue un nouveau numéro de session et adresse à la caisse une nouvelle information chiffrée Yₒ correspondant à une nouvelle information M′ₒ = n° caisse + nouveau n° de session + Mₒ = 0 + nouveau n° de session.

Grâce à la mémorisation en clair du contenu Mₙ de sa caisse, le prestataire peut vérifier que le paiement qu'il obtient de l'émetteur 3 correspond bien à cette valeur Mₙ.

Grâce à l'invention, la carte de paiement permet de s'adresser à plusieurs prestataires munis de caisses telles que décrites plus haut sans que celles-ci doivent nécessairement mémoriser pour chaque transaction le montant de celle-ci ainsi qu'une signature. La fraude du prestataire est rendue impossible car, à supposer qu'il soit capable, un jour de faible recette, de modifier, avant le transfert vers l'organisme émetteur, l'information chiffrée Yⱼ pour lui substituer une information chiffrée Y_{f} correspondant à une date antérieure de forte recette, l'organisme émetteur s'en apercevra immédiatement car dans le message chiffré Yⱼ qu'il recevra il observera immédiatement, une fois le message déchiffré par la fonction F⁻¹ que le résultat du déchiffrement obtenu n'a pas la cohérence attendue, ou encore que le numéro de session ne correspond pas à celui qui a été attribué à ladite caisse lors de la dernière transmission du message chiffré Yₒ de l'émetteur à ladite caisse, ou enfin que le numéro de caisse obtenu ne correspond pas à ladite caisse.

Il est ainsi possible de mémoriser en toute sécurité le montant global de la caisse et non plus comme dans l'art antérieur, le détail de chaque transaction accompagné d'une signature.

## Revendications

1. Système permettant d'effectuer, sans risque de fraude, un paiement d'une valeur x, entre un client possédant une carte électronique (2) à semi-conducteur, créditée d'une somme X et un prestataire possédant une caisse électronique (1) ayant un montant actuel M, ladite carte et ladite caisse étant équipées de moyens de communication bidirectionnelle, caractérisé en ce que ledit montant M de ladite caisse est dissimulé dans ladite caisse sous une forme numérique chiffrée Y au moyen d'une fonction de chiffrage F éventuellement associée à une clé CS appliquée à un nombre M′ constitué par le montant M associé à au moins un autre nombre, la carte étant programmée pour réaliser à l'aide de la même clé CS, la fonction F ainsi que la fonction inverse F⁻¹ de la fonction de chiffrage F, et en ce que ledit prestataire est relié de manière bidirectionnelle à un organisme émetteur (3) connaissant les fonctions F, F⁻¹ et la clé CS.

2. Système selon la revendication 1, caractérisé en ce que ledit autre nombre est un nombre correspondant à un numéro de caisse.

3. Système selon l'une des revendications 1 ou 2, caractérisé en ce que ledit nombre est un numéro de session choisi par l'émetteur lors du dernier transfert.

4. Système selon la revendication 3, caractérisé en ce que ledit numéro de session est répété deux fois.

5. Procédé pour effectuer un paiement de la part d'un client à un prestataire au moyen d'un système selon l'une des revendications 1 à 4, caractérisé en ce qu'il comprend les opérations suivantes :
- on établit une connexion bidirectionnelle entre la carte (2) et ladite caisse (1),
- la caisse transfère dans ladite carte le montant x du paiement à effectuer ainsi que ladite information numérique chiffrée Y dans laquelle est dissimulé le montant actuel M de la caisse,
- la carte (2) déchiffre l'information numérique Y par la fonction F⁻¹ à l'aide de ladite clé CS pour obtenir ledit montant M,
- la carte (2) additionne le montant M au montant x du paiement à effectuer,
- la carte soustrait de son montant X la valeur x,
- la carte élabore une information numérique chiffrée Y₁ au moyen de la fonction de chiffrage F appliquée, à l'aide de la clé CS, à un nombre M′₁ constitué par la somme M+x associé audit autre nombre,
- la carte (2) transfère dans ladite caisse (1) l'information numérique chiffrée Y₁ qui se substitue à l'ancienne information numérique chiffrée Y.

6. Procédé pour créditer, chez un émetteur (3), le compte d'un prestataire en utilisant le système selon l'une des revendications 1 à 4, caractérisé par les opérations suivantes :
- le prestataire active la liaison de sa caisse (1) avec ledit organisme émetteur (3),
- ladite caisse (1) transfère audit organisme (3) ladite information numérique chiffrée Y dans laquelle se dissimule le montant M de sa caisse,
- ledit organisme (3) déchiffre ladite information Y à l'aide de ladite fonction inverse F⁻¹ et de la clé CS et crédite le compte dudit prestataire de la somme M déchiffrée,
- l'émetteur (3) adresse à la caisse du prestataire une nouvelle information numérique chiffrée Yₒ obtenue par application de la fonction de chiffrage F au moyen de la clé CS à une information M′ₒ qui comporte le nouveau montant de la caisse éventuellement égal à zéro et une nouvelle valeur dudit autre nombre.

## Patentansprüche

1. System, das es ohne Betrugsrisiko ermöglicht, eine Zahlung mit einem Wert x zwischen einem Kunden, der eine elektronische Halbleiterkarte (2) besitzt, die mit einer Summe X kreditiert ist, und einem Anbieter durchzuführen, der eine elektronische Kasse (1) besitzt, die einen aktuellen Betrag M aufweist, wobei die Karte und die Kasse mit Mitteln zum Nachrichtenaustausch ausgestattet sind, dadurch gekennzeichnet, daß der Betrag M in der Kasse mit Hilfe einer Verschlüsselungsfunktion F in digitaler verschlüsselter Form Y versteckt registriert ist, wobei der Funktion eventuell ein Schlüssel CS zugeordnet ist, der auf eine Zahl M′ angewandt wird, die aus dem Betrag M und mindestens einer anderen Zahl besteht, wobei die Karte zur Bildung der Funktion F sowie der umgekehrten Funktion F⁻¹ zur Verschlüsselungsfunktion F mit Hilfe des gleichen Schlüssels CS programmiert ist, und daß der Anbieter bidirektional an ein Kartenausgabeinstitut (3) angeschlossen ist, das die Funktionen F, F⁻¹ und den Schlüssel CS kennt.

2. System nach Anspruch 1, dadurch gekennzeichnet, daß die andere Zahl eine Zahl ist, die einer Kassennummer entspricht.

3. System nach Anspruch 1 oder 2, dadurch gekennzeichnet, daß die Zahl eine Kommissionszahl ist, die vom Ausgabeinstitut bei der letzten Abrechnung gewählt wurde.

4. System nach Anspruch 3, dadurch gekennzeichnet, daß die Kommissionsnummer zweimal wiederholt wird.

5. Verfahren zur Ausführung einer Zahlung durch einen Kunden zugunsten eines Anbieters mit Hilfe eines Systems gemäß einem der Ansprüche 1 bis 4, dadurch gekennzeichnet, daß es die folgenden Operationen aufweist:
- man erstellt eine bidirektionale Verbindung zwischen der Karte (2) und der Kasse (1),
- die Kasse transferiert in die Karte den Betrag x der auszuführenden Zahlung sowie die verschlüsselte digitale Information Y, in der der aktuelle Betrag M der Kasse versteckt ist,
- die Karte (2) entschlüsselt die digitale Information Y mittels der Funktion F⁻¹ mit Hilfe des Schlüssels CS, um den Betrag M zu erhalten,
- die Karte (2) addiert den Betrag M zum Betrag x der auszuführenden Zahlung,
- die Karte subtrahiert den Wert x von ihrem Betrag X,
- die Karte erzeugt mit Hilfe der Verschlüsselungsfunktion F eine verschlüsselte digitale Information Y₁, wobei die Funktion mit Hilfe des Schlüssel CS auf eine Zahl M′₁ angewandt wird, die aus der der anderen Zahl zugeordneten Summe M + x besteht,
- die Karte (2) überträgt die mit Y₁ verschlüsselte digitale Information in die Kasse (1), wobei diese Information an die Stelle der alten verschlüsselten digitalen Information Y tritt.

6. Verfahren zum Abrechnen des Kontos eines Anbieters bei einem Kartenausgabeinstitut (3) unter Benutzung des Systems gemäß einem der Ansprüche 1-4, gekennzeichnet durch folgende Operationen:
- der Anbieter aktiviert die Verbindung seiner Kasse (1) mit dem Ausgabeinstitut (3),
- die Kasse (1) überträgt die verschlüsselte digitale Information Y an das Ausgabeinstitut (3), wobei sich in der Information Y der Betrag (M) ihrer Kasse versteckt,
- das Institut (3) entschlüsselt die Information Y mit Hilfe der umgekehrten Funktion F⁻¹ und des Schlüssels CS und schreibt dem Konto des Anbieters die entschlüsselte Summe (M) gut,
- das Ausgabeinstitut (3) richtet an die Kasse des Anbieters eine neue Yₒ verschlüsselte digitale Information, die durch Anwenden der Verschlüsselungsfunktion F mit Hilfe des Schlüssels CS auf eine Information M′ₒ erhalten wird, welche den neuen Betrag der Kasse, der eventuell Null sein kann, und einen neuen Wert der anderen Zahl enthält.

## Claims

1. The present invention concerns a fraud-proof system for making a payment of value x from a customer holding a semiconductor electronic card credited with an amount X to a service provider having an electronic till (1) with a current balance M, said card and said till being provided with two-way communication means, characterised in that said amount M in said till is concealed in said till in an encrypted numerical form Y by means of an encryption function F possibly associated with a key CS applied to a number M′ constituted by the amount M associated with at least one other number, the card being programmed to use the same key CS, the function F and the converse function F⁻¹ of the encryption function F, and in that said service provider is connected bidirectionally to an issuing organisation (3) which knows the functions F and F⁻¹ and the key CS.

2. System according to claim 1 characterised in that said other number is a number corresponding to a till number.

3. System according to claim 1 or claim 2 characterised in that said number is a session number chosen by the issuing authority at the time of the last transfer.

4. System according to claim 3 characterised in that said session number is present twice.

5. Method for making a payment from a customer to a service provider by means of a system according to any one of claims 1 to 4 characterised in that it comprises the following operations:
- a bidirectional connection is established between the card (2) and said till (1),
- the till transfers into said card the amount x of the payment to be made and said encrypted numerical indication Y in which is concealed the current amount M in the till,
- the card (2) decrypts the numerical indication Y using the function F⁻¹ and said key CS to obtain said amount M,
- the card (2) adds the amount M to the amount x of the payment to be made,
- the card subtracts the value x from its amount X,
- the card produces an encrypted numerical indication Y₁ using the encryption function F applied using the key CS to a number M′₁ consisting of the sum M + x associated with said other number,
- the card (2) transfers into said till (1) the encrypted numerical indication Y₁ which is substituted for the previous encrypted numerical indication Y.

6. Method for crediting by an issuing organisation (3) the account of a service provider using the system according to any one of claims 1 to 4 characterised in that it comprises the following operations:
- the service provider activates the link from his till (1) to said issuing organisation (3),
- said till (1) transfers to said organisation (3) said encrypted numerical indication Y in which the amount M in the till is concealed,
- said organisation (3) decrypts said indication Y using said converse function F⁻¹ and the key CS and credits the account of said service provider by the decrypted amount M,
- the issuing organisation (3) sends to the till of the service provider a new encrypted numerical indication Y₀ obtained by applying the encryption function F using the key CS to an indication M′₀ which includes the new amount in the till, which may be a zero amount, and a new value of said other number.
